(19) Europäisches Patentamt / European Patent Office / Office européen des brevets

(11) **EP 2 731 754 B1**

(12) **EUROPEAN PATENT SPECIFICATION**

(45) Date of publication and mention of the grant of the patent:
**17.10.2018 Bulletin 2018/42**

(21) Application number: **12734919.9**

(22) Date of filing: **06.07.2012**

(51) Int Cl.:
**B23Q 17/09** *(2006.01)*  **B23Q 17/24** *(2006.01)*
**B23B 49/00** *(2006.01)*  **B23Q 17/12** *(2006.01)*

(86) International application number:
**PCT/EP2012/063309**

(87) International publication number:
**WO 2013/007655 (17.01.2013 Gazette 2013/03)**

(54) **METHOD FOR CHECKING THE PRESENCE OF A ROTATING ELEMENT IN A MACHINE TOOL**

VERFAHREN ZUR PRÜFUNG DES VORHANDENSEINS EINES ROTIERENDEN ELEMENTS IN EINER WERKZEUGMASCHINE

PROCÉDÉ DE CONTRÔLE DE LA PRÉSENCE D'UN ÉLÉMENT ROTATIF DANS UNE MACHINE-OUTIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2011 IT BO20110415**

(43) Date of publication of application:
**21.05.2014 Bulletin 2014/21**

(73) Proprietor: **Marposs Societa' Per Azioni**
**40010 Bentivoglio (BO) (IT)**

(72) Inventors:
• **MALPEZZI, Domenico**
**I-48013 Brisighella (RA) (IT)**
• **BARBIERI, Nicola**
**I-40066 Pieve di Cento (BO) (IT)**

(56) References cited:
**EP-A1- 0 493 908     EP-A1- 0 619 469**

## Description

Technical field

The present invention relates to a checking method and apparatus for checking the presence of a rotating element. The present invention can advantageously be applied to check the presence of a rotating tool in a numerical control machine tool, to which reference will be explicitly made in the specification without loss of generality.

Background art

In a numerical control machine tool different types of tools can be mounted on the spindle. These tools are taken from and replaced in an automatic store and, in use, are rotated to machine a piece by removing material.

When it is necessary to change the tool, the spindle is placed at the automatic store where it replaces the old tool and takes the new one.

As it can occur that the spindle does not take the new tool from the store, after a tool change it is necessary to check that the spindle has actually taken the new tool. In other words, it has to be checked that the tool is actually present in the spindle.

Moreover, in the course of the use the tool could break (typically, but not only, when the tool is a drill bit with a small diameter) and thus it is necessary to check that the tool carried by the spindle is entire (that is to say, it comprises its end portion, which is its tip).

In order to check that the spindle actually carries a tool (more specifically, a rotating tool, that is a tool rotated by the spindle) and that the tool is entire (that is, it comprises its end portion) the numerical control machine can include a checking apparatus or device of the contact type (which can not be used, however, for checks while the tool is rotating) or contactless type. Contactless devices can, for example, detect the presence of the rotating tool by means of the interruption of a light beam (this solution often has problems of overall dimensions) or the observation and the analysis of a radiation reflected by the tool itself.

A checking apparatus of the last type such as, for example, the one shown in US-A-5293048 includes an emitter of an electromagnetic radiation (typically, but not necessarily, a laser beam) which is directed to the area in which the rotating tool should be positioned, and a receiver which is arranged next to the emitter and receives the electromagnetic radiation reflected by the rotating tool. A processing unit of the checking apparatus analyzes the reflected electromagnetic radiation detected by the receiver and determines as a function of said analysis whether the rotating tool is actually present or not.

The analysis of the reflected electromagnetic radiation detected by the receiver is critical, since it must assure a high reliability in determining the presence of the rotating tool. In particular, such analysis includes complex processing, so as to avoid both false positive errors (that is, to determine that the rotating tool is present when it is not really present) and false negative errors (that is, to determine that the rotating tool is not present when it is really present).

The level of risk of false positive errors is quite high, because the receiver can detect noises which could be mistaken for a radiation reflected by the rotating tool. For example, the noises can include the electromagnetic radiation emitted by the emitter and reflected by objects other than the rotating tool (for example, coolant which is sprayed towards the rotating tool, dust or swarfs caused by the machining, or other reflecting surfaces placed behind the tool), or the noises can comprise the electromagnetic radiation emitted by other sources (for example fluorescent lamps providing the environmental lighting).

There is also the risk of false negative errors. In fact, using strict criteria for the analysis of the electromagnetic radiation detected by the emitter in order to try to avoid the false positive errors, may imply, as a negative consequence, that an electromagnetic radiation which has been actually reflected by the rotating tool but accidentally includes noises is not recognized as a reflection of the rotating tool. EP0493908 A1 discloses a checking method according to the preamble of claim 1 and a checking apparatus according to the preamble of claim 19.

Disclosure of the invention

Object of the present invention is to provide a checking method and apparatus for checking the presence of a rotating element, said checking method and apparatus enabling to detect the presence of the rotating tool with increased reliability and, concurrently, being easily and cheaply implemented.

The present invention provides a checking method and apparatus for checking the presence of a rotating tool according to what is claimed in the attached claims.

Brief description of the drawings

The present invention is hereinafter described with reference to the attached sheets of drawings given by way of non-limiting examples, wherein:

- figure 1 is a simplified view, with some parts removed and other parts enlarged for the sake of clarity, of a numerical control machine tool with a checking apparatus for checking the presence of a rotating tool according to the present invention; and
- figures 2-5 show four diagrams showing data processed by the checking apparatus for checking the presence of the rotating tool.

Best mode for carrying out the invention

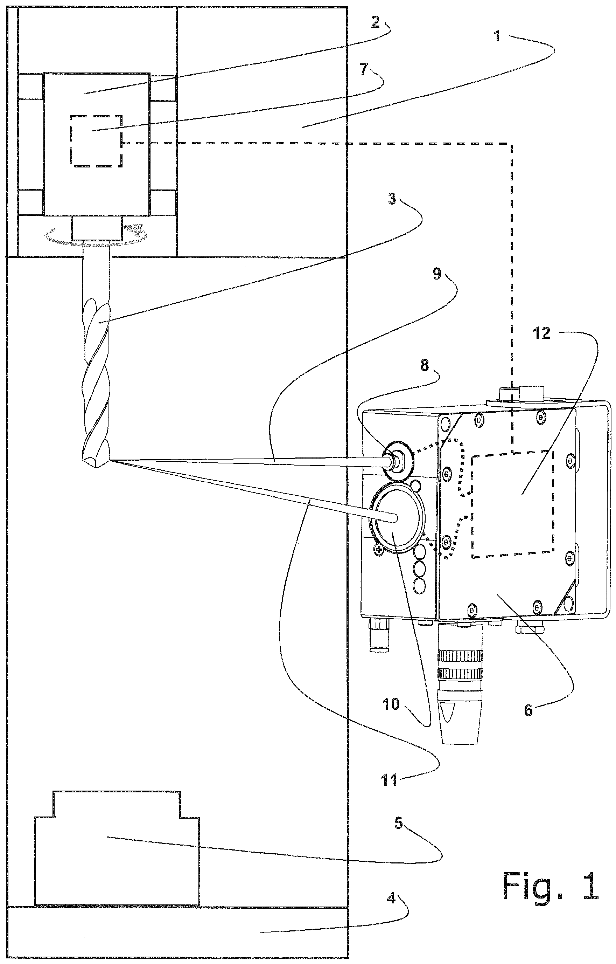

In figure 1, a numerical control machine tool 1 (for instance an automatic drilling machine) is very schematically illustrated and includes a spindle 2 carrying a rotating tool 3 (a drill bit in the particular case shown in figure 1) and a worktable 4 carrying a piece 5 being machined.

Moreover, the machine tool 1 includes a checking apparatus 6 which checks the presence (and thus indirectly the entirety) of the rotating tool 3. The entirety of the rotating tool 3 is detected by directing the checking apparatus 6 towards the end portion (that is, towards the tip) of the rotating tool 3: if the end portion of the rotating tool 3 is actually present, it is assumed that the rotating tool 3 is present and is also entire. Obviously, the checking apparatus 6 could be used to check only the presence of the rotating tool 3 by directing the checking apparatus 6 towards a central portion of the rotating tool 3 itself.

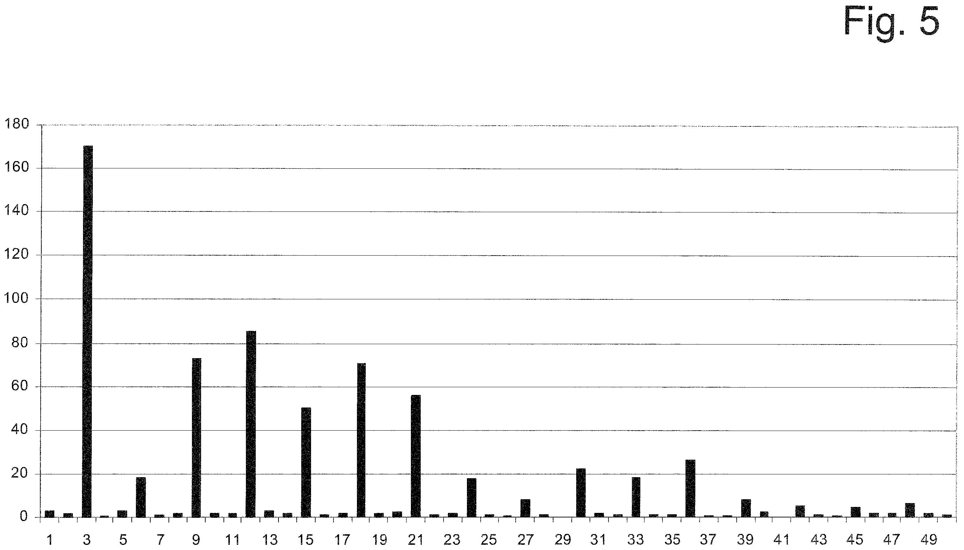

The machine tool 1 can include a speed sensor 7 mechanically connected to the spindle 2 to measure a rotational frequency (that is, a speed of rotation), in particular a real rotational frequency RF, of the rotating tool 3 and provide its own reading to a (digital or analog) input of the checking apparatus 6. According to an equivalent embodiment, the machine tool 1 doesn't include the speed sensor 7. In this case, the real rotational frequency RF of the rotating tool 3 is accurately estimated on the basis of a nominal frequency, which is per se known as control parameter of an electric motor which puts the spindle 2 into rotation, by means of proper processing operations such as the ones hereinafter described with reference to figure 5.

The checking apparatus 6 includes an optical emitter 8 to direct a main electromagnetic radiation 9 towards the rotating tool 3. According to a preferred embodiment, the main electromagnetic radiation 9 is a pulsed laser beam (which corresponds to a periodically recurring alternation of presence and absence of the laser beam) that oscillates (pulses) with a frequency of the order of 10-500 kHz. Moreover, the checking apparatus 6 includes an optical receiver 10 to receive a reflected electromagnetic radiation 11 which has been reflected by the rotating tool 3. In other words, the optical receiver 10 "catches" the reflection generated by the rotating tool 3 of the main electromagnetic radiation 9 emitted by the optical emitter 8.

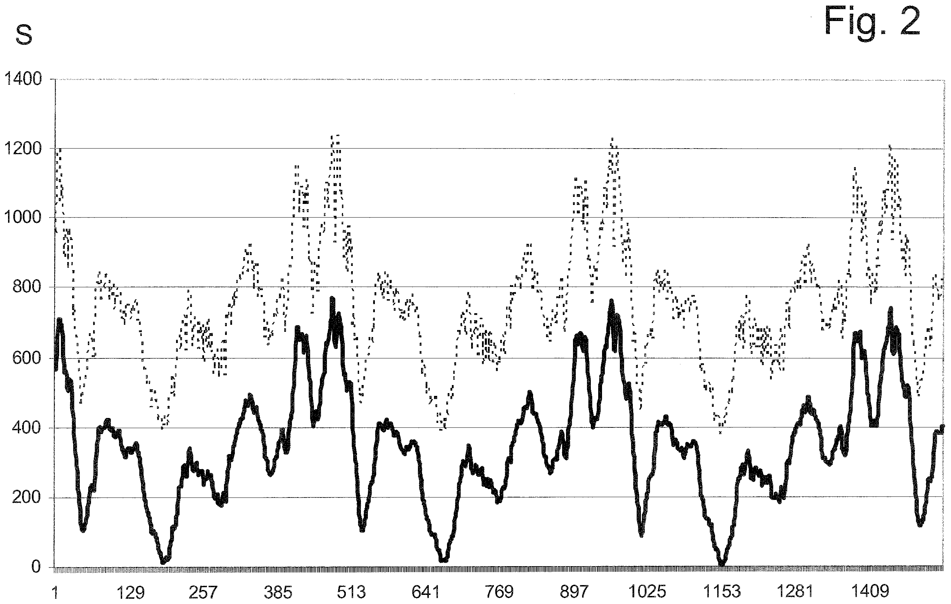

The checking apparatus 6 includes a processing unit 12 that collects the reflected electromagnetic radiation 11 (that is, it collects the electric signals provided by the optical receiver 10 which is "hit" by the reflected electromagnetic radiation 11) to determine a rough signal S to analyze (shown in figure 2). According to a preferred embodiment, the collection of the reflected electromagnetic radiation 11 is carried out by means of a sample and hold circuit synchronized with the oscillation frequency of the main electromagnetic radiation 9.

Knowing the real rotational frequency RF of the rotating tool 3 (such frequency can be obtained in two different ways: provided by the speed sensor 7 to the processing unit 12 or processed, in the absence of any speed sensor, on the basis of a known nominal frequency), the processing unit 12 determines the length of the rough signal S as a function of the real rotational frequency RF so that the rough signal S includes at least two complete rotations of the rotating tool 3 and, preferably, includes at least three complete rotations of the rotating tool 3 (obviously, the rough signal S can include more than three complete rotations of the rotating tool 3, the important thing is that the rough signal 3 never includes less than two complete rotations of the rotating tool 3). It should be noted that the greater the number of complete rotations of the rotating tool 3 included in the rough signal S is, the simpler and more accurate the analysis of the rough signal S to determine the presence of the rotating tool 3 is, but, the longer the time required is. The processing operations hereinafter described enable to get very good results using a limited number of complete rotations of the tool and thus in a very short time.

In calculating the length of the rough signal S, the processing unit 12 takes account of the difference between the real rotational frequency RF and the known nominal rotational frequency and determines the length of the rough signal S in such a way that even in the worst case, that is in the case that the real rotational frequency RF is lower than the nominal one, with a maximal difference lying within a known variability range, the rough signal S includes at least two complete rotations of the rotating tool 3 (at least three complete rotations of the rotating tool 3 in the preferred embodiment).

In the example shown in figure 2, the dashed line represents the rough signal S which is composed by 1536 samples. Such rough signal S has been obtained by demodulating the reflected electromagnetic radiation 11 with a sampling frequency of 1.6 kHz and at a nominal rotational frequency of the rotating tool 3 equal to 200 RPM (that is, equal to 200/60=3,333 Hz). If the real rotational frequency RF corresponded to the nominal one, sampling at 1.6 kHz a complete rotation of the rotating tool 3 would include 480 samples. It is necessary, however, to take into account that the real rotational frequency RF could generally vary with respect to the nominal one at which the electric motor putting the spindle 2 into rotation is driven. Typically, the variation lies within a variability range of $\pm 5$. This is generally true and doesn't affect the proper machining operations of the machine tool performed by means of the tool 3 in any way. Hence, in the worst case (that is, in the case that the real rotational frequency RF is 5% lower than the nominal frequency) a complete rotation of the rotating tool 3 includes 512 samples (that is, 480 samples + 5% + rounding off to have a "convenient" number to store, as 512 is a power of 2). Therefore, the rough signal S must be composed of 1536 (=512x3) samples to be certain that the rough signal S refers to at least three complete rotations of the rotating tool 3.

According to a possible embodiment, the reflected electromagnetic radiation is collected with a sampling frequency that is varied as a function of the rotational frequency of the rotating tool 3 in such a way that the sampling frequency increases as the rotational frequency increases. For example, when the nominal rotational frequency of the rotating tool 3 is between 200RPM and 1000 RPM, the sampling frequency can be equal to 1.6 kHz, while when the nominal rotational frequency of the rotating tool 3 is between 1000 RPM and 5000 RPM the sampling frequency can be equal to 8 kHz. Since the sampling frequency increases as the rotational frequency of the rotating tool 3 increases, it is possible to keep the accuracy of the collection quite constant (that is to say, to have a more or less constant number of samples for each complete rotation of the rotating tool 3, and thus a number which is not too great when the rotating tool rotates slowly and/or not too small when the rotating tool 3 rotates quickly).

According to a possible embodiment, the number of complete rotations of the rotating tool 3 included in the rough signal S is not constant but increases as the rotational frequency of the rotating tool 3 increases. In this way, the length of the collection of the rough signal S is more or less constant (so that the time needed to check the presence of the rotating tool 3 can be kept more or less constant).

According to a preferred embodiment, the processing unit 12 applies in advance (that is, before further processing operations hereinafter described) to the rough signal S a low-pass software filtering. Moreover, according to a preferred embodiment, the processing unit 12 applies in advance (that is, before further processing operations hereinafter described) to the rough signal S a time scaling of the values by subtracting a constant value equal to the minimum value of the rough signal S. In figure 2, the dashed line represents the rough signal S which is not filtered and not time scaled, while the continuous line represents the rough signal S filtered and time scaled.

In the preferred embodiment, in which the real rotational frequency RF is not provided by the speed sensor 7, the processing unit 12 firstly processes the filtered and time scaled rough signal S to determine an exact period of rotation of the rough signal S (that is the period of the rough signal S corresponding to the period of rotation of the rotating tool 3) by means of an analysis in the time domain. Then, after the exact period of rotation of the rough signal S is determined, the processing unit 12 cuts a part of the rough signal as a function of the exact period of rotation of the rough signal S in such a way that the cut rough signal S exactly includes a whole number of complete rotations of the rotating tool 3. In other words, normally the rough signal S includes a fractional number of complete rotations of the rotating tool 3 and thus the rough signal S is cut (that is to say, a part of the samples included in the rough signal S is cut) in such a way that, after the cut-off, the cut rough signal S

exactly includes a whole number of complete rotations of the rotating tool 3 (for example, exactly three complete rotations of the rotating tool 3 as in the embodiment shown in figures 2-5). The cut-off of the rough signal S can take place only at the initial portion of the rough signal S, only at the end portion of the rough signal S, or at both the initial portion and the end portion of the rough signal S.

The processing unit 12 determines the exact period of rotation of the rough signal S by means of an analysis in the time domain performed with a pitch detection algorithm enabling to estimate the period of the fundamental frequency of a quasiperiodic and virtually periodic signal. Preferably, the processing unit 12 uses the autocorrelation function AMDF ("Average Magnitude Difference Function") which is based on the following equation:

$$AMDF(k) = \sum_{M=k}^{N-1} |S(m) - S(m-k)|$$

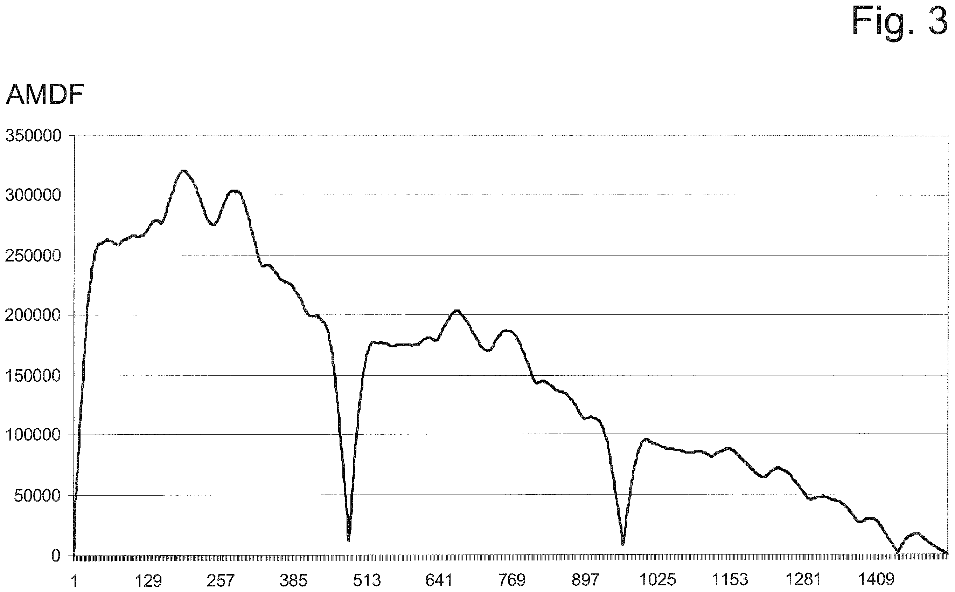

Figure 3 shows the value of the AMDF of the samples of the rough signal S represented in figure 2.

The autocorrelation function ASMDF ("Average Squared Mean Difference Function") or another autocorrelation function could be used instead of the autocorrelation function AMDF. The processing unit 12 determines the exact period of rotation of the rough signal S (thus of the rotating tool 3) by identifying the lowest of the local minima of the AMDF function included in a search interval that is determined as a function of the nominal rotational frequency of the rotating tool 3 and as a function of the variability range of the real rotational frequency RF with respect to the nominal one. With reference to the embodiment shown in figures 2 and 3, the nominal rotational frequency of the rotating tool 3 is equal to 200 RPM (3.333 Hz) and if this was the value of the real rotational frequency RF, sampling at 1.6 kHz a complete rotation of the rotating tool 3 would include 480 samples. Taking account of the variability range of the real rotational frequency RF (±5% of the nominal frequency) the search interval is centered on 480 samples and has a width of ±5% of 480 samples, that is equal to ±24 samples. Hence, the search interval is between 480-24=456 samples and 480+24=504 samples. The exact rotational period of the rough signal S (and thus of the rotating tool 3) which corresponds to the real rotational frequency RF can thus be searched between the sample 456 and the sample 504. In the AMDF function the periodicity corresponds to the lowest of the local minima included between the sample 456 and the sample 504.

It should be noted that if any local minimum is not included in the search interval (between the 456th value and the 504th value of the AMDF function in the case of figure 3) the processing unit 12 determines that the rotating tool can not be recognized and thus is not present.

As previously stated, once the exact rotational period of the rough signal S is determined, the processing unit 12 cuts the rough signal S in such a way that the rough signal S exactly includes a whole number of complete rotations of the rotating tool 3 (for example, exactly three complete rotations of the rotating tool 3 as in the embodiment shown in figures 2-5).

After the cut-off of the rough signal S, the processing unit 12 decimates/expands, by applying a resampling for example by means of linear interpolation, the cut rough signal S in such a way that the cut rough signal S includes a number of samples equal to a power of the number 2 (for example 1024, that is $2^{10}$, as in the embodiment shown in figures 2-5). A decimation/expansion of the cut rough signal S in order to have a number of samples equal to a power of number 2 is not strictly necessary but enables the application of the FFT ("Fast Fourier Transform") instead of a DFT ("Discrete Fourier Transform") which is less efficient from the computational point of view.

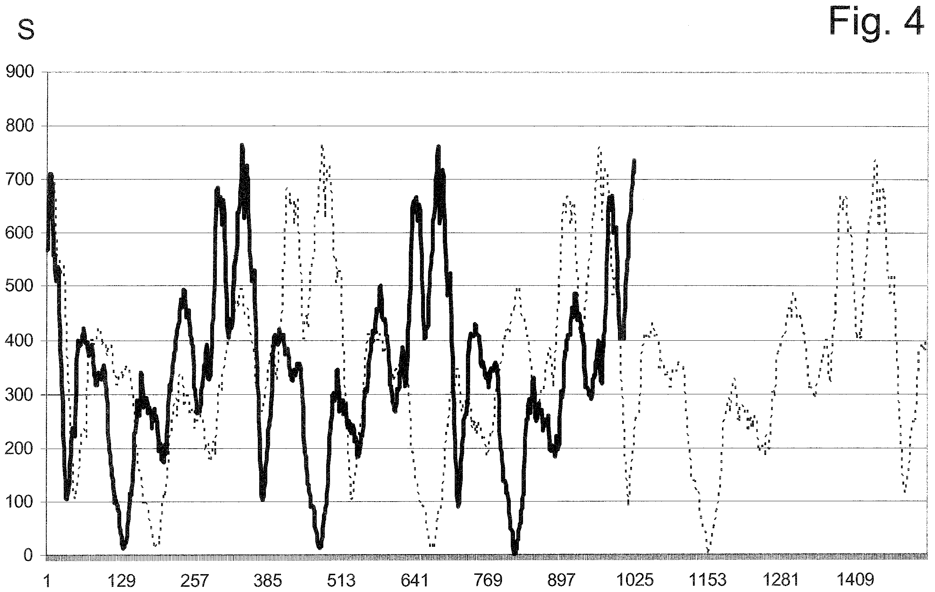

In figure 4, the continuous line represents the rough signal S which has been cut and, in this case, decimated (thus including 1024 samples), while the dashed line represents the rough signal S before the cut off and the decimation (that is, only filtered and time scaled).

After the decimation/expansion of the cut rough signal S, the processing unit 12 applies to the cut and decimated/expanded rough signal S the FFT to move from the time domain to the frequency domain and thus to perform an analysis in the frequency domain. Figure 5 shows the result of the application of the FFT to the cut and decimated rough signal S (represented with a continuous line in figure 4).

Once the FFT has been applied, the processing unit 12 analyzes the harmonics of the rough signal S to check whether the rough signal S includes a periodicity with a frequency corresponding to (correlated with) the rotational frequency of the rotating tool 3, preferably to the real rotational frequency RF. Then, the processing unit 12 determines that the rotating tool 3 is actually present if the rough signal S includes a periodicity with a frequency corresponding to (correlated with) the rotational frequency of the rotating tool 3. It should be noted that the frequency of a periodicity of the rough signal S corresponds to (is correlated with) the rotational frequency of the rotating tool 3 when it is an integral multiple of - or is equal to, when it is a multiple of order 1 - the rotational frequency of the rotating tool 3. In particular, the processing unit 12 analyzes the rough signal S in the frequency domain and determines that the rough signal S includes a periodicity with a frequency corresponding to (correlated with) the real rotational frequency RF of the rotating tool 3 if the frequency content of the rough signal S has predominant components at integral multiples of the real rotational frequency RF of the rotating tool 3.

According to a first approach, the processing unit 12 determines the amplitude and the order of the harmonic with the maximum amplitude (in figure 5 the harmonic with the maximum amplitude is the third harmonic with an amplitude of about 170) and thus the processing unit 12 determines that the rotating tool 3 is actually present if the order of the harmonic with the maximum amplitude is an integral multiple of the whole number of complete rotations of the rotating tool 3 included in the cut rough signal S (that is, an integral multiple of three in the example shown in figures 2-5). According to an alternative embodiment, the processing unit determines that the rotating tool is actually present if the order of the harmonic with the maximum amplitude is an integral multiple of the whole number of complete rotations of the rotating tool 3 included in the cut rough signal S and if, at the same time, the maximum amplitude of the harmonic with the maximum amplitude is higher than a first threshold value.

According to a different approach, the processing unit 12 calculates a signal-to-noise ratio as a function of the whole number of complete rotations of the rotating tool 3 included in the cut rough signal S (that is, as a function of the number three in the example shown in figures 2-5) and thus determines that the rotating tool 3 is actually present if the signal-to-noise ratio is higher than a second threshold value. In other words, in calculating the signal-to-noise ratio all the amplitudes of the harmonics the order of which is an integral multiple of the whole number of complete rotations of the rotating tool 3 included in the cut rough signal S are considered as useful signal, and all the amplitudes of the harmonics the order of which is not an integral multiple of the whole number of complete rotations of the rotating tool 3 included in the cut rough signal S are considered as noise. For example, according to a first method of calculating the signal-to-noise ratio, the signal-to-noise ratio is calculated as a fraction where the numerator is the sum (for example quadratic) of the amplitudes of the harmonics the order of which is an integral multiple of the whole number of complete rotations of the rotating tool 3 included in the cut rough signal, and the denominator is the sum (for example quadratic) of all the amplitudes of the harmonics the order of which is not an integral multiple of the whole number of complete rotations of the rotating tool 3 included in the cut rough signal S. According to another method of calculating the signal-to-noise ratio (which is perfectly equivalent to the first method above-described) the signal-to-noise ratio is calculated as a fraction where the numerator is the sum (for example quadratic) of the amplitudes of the harmonics the order of which is an integral multiple of the whole number of complete rotations of the rotating tool 3 included in the cut rough signal S, and the denominator is the difference between the sum (for example quadratic) of all the amplitudes and the numerator. According to a different embodiment, the processing unit 12 doesn't determine the exact rotational period of the rough signal S and thus doesn't cut the rough signal S. In this case, before the decimation/expansion is performed (and thus before the FFT is applied) the processing unit 12 can apply to the rough signal S a window function (for example a Hanning window) so as to avoid (or at least limit) the spectral leakage phenomenon. The accuracy/reliability of this embodiment is fair but lower than that of the above-described preferred embodiment.

According to another embodiment, the processing unit 12 doesn't perform the decimation/expansion of the rough signal S, and thus, rather than applying the FFT, it applies the DFT (that is, the traditional Fourier transform) to the rough signal S. The accuracy/reliability of this embodiment is not lower than that of the above-described preferred embodiment, but it requires a computing power higher (or, if the computing power is the same, a computing time longer) than that of the above-described preferred embodiment.

The above-described checking method for checking the presence of a rotating element provides many advantages. First of all, the above-described checking method enables to determine the presence or absence (breakage) of the rotating tool 3 in a quick and very reliable way.

Moreover, as the above-described method neither requires a high computing power nor uses a large amount of memory, it can be easily and cheaply implemented.

In the embodiment described above and shown in the attached figures, the checking method is used to check the presence/breakage of the rotating tool 3. Obviously, it can be used to check the presence/breakage of any other type of rotating element other than a rotating tool.

## Claims

1. Checking method for checking the presence of a rotating element (3), the checking method includes the steps of:

   - obtaining a rotational frequency (RF) of the rotating element (3);
   - directing a main electromagnetic radiation (9) towards the rotating element (3) by means of an emitter (8);
   - receiving a reflected electromagnetic radiation (11) that has been reflected by the rotating element (3) by means of a receiver (10);
   - collecting the reflected electromagnetic radiation (11) to determine a rough signal (S) to be analyzed;
   - analyzing the rough signal (S) to verify whether the rough signal (S) includes a periodicity with a frequency corresponding to the rotational frequency (RF) of the rotating element (3); and
   - determining that the rotating element (3) is actually present if the rough signal (S) includes a periodicity with a frequency corresponding to the rotational frequency (RF) of the rotating element (3);

the checking method is **characterized in that** it includes the further steps of:

   - analyzing the rough signal (S) in the frequency domain;
   - determining the length of the rough signal (S) as a function of the rotational frequency (RF) of the rotating element (3) in such a way that the rough signal (S) includes at least two complete rotations of the rotating element (3); and
   - determining that the rough signal (S) includes a periodicity with a frequency corresponding to the rotational frequency (RF) of the rotating element (3), if the frequency content of the rough signal (S) has predominant components at integral multiples of the rotational frequency (RF) of the rotating element (3).

2. Checking method according to claim 1 and including the further steps of:

   - determining an exact rotational period of the rough signal (S) by means of an analysis in the time domain of the rough signal (S);
   - cutting a part of the rough signal (S) as a function of the exact rotational period of the rough signal (S) in such a way that the cut rough signal (S) exactly includes a whole number of complete rotations of the rotating element (3); and
   - analyzing the cut rough signal (S) in the frequency domain.

3. Checking method according to claim 2 and including the further step of determining the exact rotational period of the rough signal (S) by means of an analysis in the time domain which is performed with a pitch detection algorithm.

4. Checking method according to claim 3 and including the further step of determining the exact rotational period of the rough signal (S) by means of an analysis in the time domain which is performed with a pitch detection algorithm using the autocorrelation function AMDF (Average Magnitude Difference Function).

5. Checking method according to claim 2, 3 or 4 and including the further step of determining the exact rotational period of the rough signal (S) by searching for the exact rotational period within a search interval which is determined as a function of a nominal rotational frequency of the rotating element (3) and as a function of a variability range with respect to the nominal rotational frequency.

6. Checking method according to claim 5 and including the further step of determining that the rotating element (3) can not be recognized and thus is not present if it is not possible to determine the exact rotational period of the rough signal (S) within the search interval.

7. Checking method according to any one of claims 2 to 6 and including the further step of decimating/expanding, by applying a resampling, the cut rough signal (S), before the analysis in the time domain is performed.

8. Checking method according to claim 7 and including the further step of decimating/expanding the rough signal (S) in such a way that the rough signal (S) includes a number of samples that is equal to a power of the number two.

9. Checking method according to any one of claims 1 to 8 and including the further step of applying a Fourier Transform to the rough signal (S) to move from the time domain to the frequency domain.

10. Checking method according to claim 9, wherein said Fourier Transform is a FFT (Fast Fourier Transform).

11. Checking method according to claim 9 or claim 10 and including the further steps of:

   - determining the amplitude and the order of the harmonic with the highest amplitude; and
   - determining that the rotating element (3) is actually present if the order of the harmonic with the highest amplitude is an integral multiple of the whole number of complete rotations of the rotating element (3) included in the rough signal (S).

12. Checking method according to claim 11 and including the further step of determining that the rotating element (3) is actually present if the order of the harmonic with the highest amplitude is an integral multiple of the whole number of complete rotations of the rotating element (3) included in the rough signal (S), and if, at the same time, the highest amplitude of the harmonic with the highest amplitude is higher than a first threshold value.

13. Checking method according to claim 9 or claim 10 and including the further steps of

   - calculating a signal-to-noise ratio as a function of the whole number of complete rotations of the rotating element (3) included in the rough signal (S); and
   - determining that the rotating element (3) is actually present if the signal-to-noise ratio is higher than a second threshold value.

14. Checking method according to claim 13, wherein in calculating the signal-to-noise ratio all the amplitudes of the harmonics the order of which is an integral multiple of the whole number of complete rotations of the rotating element (3) included in the rough signal (S) are considered as useful signal, and all the amplitudes of the harmonics the order of which is not an integral multiple of the whole number of complete rotations of the rotating element (3) included in the rough signal (S) are considered as noise.

15. Checking method according to claim 13 or 14 and including the further step of calculating the signal-to-noise ratio as a fraction where the numerator is a sum of the amplitudes of the harmonics the order of which is an integral multiple of the whole number of complete rotations of the rotating element (3) included in the rough signal (S), and the denominator is a sum of all the amplitudes of the harmonics the order of which is not an integral multiple of the whole number of complete rotations of the rotating element (3) included in the rough signal (S).

16. Checking method according to claim 13 or 14 and including the further step of calculating the signal-to-noise ratio as a fraction where the numerator is a sum of the amplitudes of the harmonics the order of which is an integral multiple of the whole number of complete rotations of the rotating element (3) included in the rough signal (S), and the denominator is the difference between the sum of all the amplitudes and the numerator.

17. Checking method according to any one of claims 1 to 16 and including the further step of varying the sampling frequency of the reflected electromagnetic radiation (11) as a function of the rotational frequency (RF) of the rotating element (3) in such a way that the sampling frequency increases as the rotational frequency (RF) increases.

18. Checking method according to any one of claims 1 to 17 and including the further step of varying the number of complete rotations of the rotating element (3) included in the rough signal (S) as a function of the rotational frequency (RF) of the rotating element (3) in such a way that the number of complete rotations of the rotating element (3) included in the rough signal (S) increases as the rotational frequency (RF) increases.

19. Checking apparatus for checking the presence of a rotating element (3) at a known or determinable rotational frequency (RF); the checking apparatus (6) comprises:

   - an emitter (8) for directing a main electromagnetic radiation (9) towards the rotating element (3);

- a receiver (10) for receiving a reflected electromagnetic radiation (11) which has been reflected by the rotating element (3); and
- a processing unit (12) which is configured to sample the reflected electromagnetic radiation (11) to determine a rough signal (S) to be analyzed, analyze the rough signal (S) to verify if the rough signal (S) includes a periodicity with a frequency corresponding to the rotational frequency (RF) of the rotating element (3), and determine that the rotating element (3) is actually present if the rough signal (S) includes a periodicity with a frequency corresponding to the rotational frequency (RF) of the rotating element (3); the checking apparatus (6) is **characterized in that** the processing unit (12) is configured to
- analyze the rough signal (S) in the frequency domain;
- determine the length of the rough signal (S) as a function of the rotational frequency (RF) of the rotating element (3) in such a way that the rough signal (S) includes at least two complete rotations of the rotating element (3); and
- determine that the rough signal (S) includes a periodicity with a frequency corresponding to the rotational frequency (RF) of the rotating element (3) if the frequency content of the rough signal (S) has dominant components at integral multiples of the rotational frequency (RF) of the rotating element (3).

20. Checking apparatus according to claim 19, wherein said main electromagnetic radiation is a pulsed laser beam.


**Patentansprüche**

1. Prüfverfahren zum Prüfen des Vorhandenseins eines rotierenden Elements (3), wobei das Prüfverfahren die Schritte einschließt:

    - Erhalten einer Rotationsfrequenz (RF) des rotierenden Elements (3);
    - Richten einer elektromagnetischen Hauptstrahlung (9) auf das rotierende Element (3) mittels eines Emitters (8);
    - Empfangen einer reflektierten elektromagnetischen Strahlung (11), die durch das rotierende Element (3) reflektiert worden ist, mittels eines Empfängers (10);
    - Sammeln der reflektierten elektromagnetischen Strahlung (11), um ein zu analysierendes Grobsignal (S) zu bestimmen;
    - Analysieren des Grobsignals (S), um zu verifizieren, ob das Grobsignal (S) eine Periodizität mit einer Frequenz einschließt, die der Rotationsfrequenz (RF) des rotierenden Elements (3) entspricht; und
- Bestimmen, dass das rotierende Element (3) tatsächlich vorhanden ist, falls das Grobsignal (S) eine Periodizität mit einer Frequenz einschließt, die der Rotationsfrequenz (RF) des rotierenden Elements (3) entspricht;

wobei das Prüfverfahren **dadurch gekennzeichnet ist, dass** es die folgenden weiteren Schritte einschließt:

    - Analysieren des Grobsignals (S) in der Frequenzdomäne;
    - Bestimmen der Länge des Grobsignals (S) als Funktion der Rotationsfrequenz (RF) des rotierenden Elements (3) in einer solchen Weise, dass das Grobsignal (S) mindestens zwei vollständige Umdrehungen des rotierenden Elements (3) einschließt; und
    - Bestimmen, dass das Grobsignal (S) eine Periodizität mit einer Frequenz entsprechend der Rotationsfrequenz (RF) des rotierenden Elements (3) einschließt, falls der Frequenzgehalt des Grobsignals (S) vorherrschende Komponenten an ganzzahligen Vielfachen der Rotationsfrequenz (RF) des rotierenden Elements (3) aufweist.

2. Prüfverfahren nach Anspruch 1 und einschließend die weiteren folgenden Schritte:

    - Bestimmen einer exakten Rotationsperiode des Grobsignals (S) mittels einer Analyse in der Zeitdomäne des Grobsignals (S);
    - Schneiden eines Teils des Grobsignals (S) als Funktion der exakten Rotationsperiode des Grobsignals (S) in einer solchen Weise, dass das geschnittene Grobsignal (S) exakt eine ganze Anzahl vollständiger Umdrehungen des rotierenden Elements (3) einschließt; und
    - Analysieren des geschnittenen Grobsignals (S) in der Frequenzdomäne.

3. Prüfverfahren nach Anspruch 2 und einschließend den weiteren Schritt des Bestimmens der exakten Rotationsperiode des Grobsignals (S) mittels einer Analyse in der Zeitdomäne, die mit einem Pitch-Erkennungsalgorithmus durchgeführt wird.

4. Prüfverfahren nach Anspruch 3 und einschließend den weiteren Schritt des Bestimmens der exakten Rotationsperiode des Grobsignals (S) mittels einer Analyse in der Zeitdomäne, die mit einem Pitch-Erkennungsalgorithmus unter Verwendung der Autokorrelationsfunktion AMDF (durchschnittliche Betragsdifferenzfunktion; Average Magnitude Difference Function) durchgeführt wird.

**5.** Prüfverfahren nach Anspruch 2, 3 oder 4 und einschließend den weiteren Schritt des Bestimmens der exakten Rotationsperiode des Grobsignals (S) durch Suchen nach der exakten Rotationsperiode innerhalb eines Suchintervalls, das als Funktion einer nominellen Rotationsfrequenz des rotierenden Elements (3) und als Funktion eines Variabilitätsbereichs in Bezug auf die nominelle Rotationsfrequenz bestimmt wird.

**6.** Prüfverfahren nach Anspruch 5 und einschließend den weiteren Schritt des Bestimmens, dass das rotierende Element (3) nicht erkannt werden kann und somit nicht vorhanden ist, falls es nicht möglich ist, die exakte Rotationsperiode des Grobsignals (S) innerhalb des Suchintervalls zu bestimmen.

**7.** Prüfverfahren nach einem der Ansprüche 2 bis 6 und einschließend den weiteren Schritt des Dezimierens/Expandierens des geschnittenen Grobsignals (S) durch Anwenden von einem Resampling, bevor die Analyse in der Zeitdomäne durchgeführt wird.

**8.** Prüfverfahren nach Anspruch 7 und einschließend den weiteren Schritt des Dezimierens/Expandierens des Grobsignals (S) in einer solchen Weise, dass das Grobsignal (S) eine Anzahl von Proben einschließt, die gleich einer Potenz der Zahl zwei ist.

**9.** Prüfverfahren nach einem der Ansprüche 1 bis 8 und einschließend den weiteren Schritt des Anwendens einer Fourier-Transformation auf das Grobsignal (S), um von der Zeitdomäne zu der Frequenzdomäne zu gehen.

**10.** Prüfverfahren nach Anspruch 9, wobei die Fourier-Transformation eine FFT (schnelle Fourier-Transformation; Fast Fourier Transform) ist.

**11.** Prüfverfahren nach Anspruch 9 oder Anspruch 10 und einschließend die weiteren folgenden Schritte:

     - Bestimmen der Amplitude und der Ordnung der Oberschwingung mit der höchsten Amplitude; und
     - Bestimmen, dass das rotierende Element (3) tatsächlich vorhanden ist, falls die Ordnung der Oberschwingung mit der höchsten Amplitude ein ganzzahliges Vielfaches der ganzen Anzahl von vollständigen Umdrehungen des rotierenden Elements (3) ist, die in das Grobsignal (S) eingeschlossen sind.

**12.** Prüfverfahren nach Anspruch 11 und einschließend den weiteren Schritt des Bestimmens, dass das rotierende Element (3) tatsächlich vorhanden ist, falls die Ordnung der Oberschwingung mit der höchsten Amplitude ein ganzzahliges Vielfaches der ganzen Anzahl der vollständigen Umdrehungen des rotierenden Elements (3) ist, die in das Grobsignal (S) eingeschlossen sind, und falls gleichzeitig die höchste Amplitude der Oberschwingung mit der höchsten Amplitude höher als ein erster Schwellenwert ist.

**13.** Prüfverfahren nach Anspruch 9 oder Anspruch 10 und einschließend die weiteren folgenden Schritte:

     - Berechnen eines Signal/Rausch-Verhältnisses als Funktion der ganzen Anzahl der vollständigen Umdrehungen des rotierenden Elements (3), die in das Grobsignal (S) eingeschlossen sind; und
     - Bestimmen, dass das rotierende Element (3) tatsächlich vorhanden ist, falls das Signal/RauschVerhältnis größer als ein zweiter Schwellenwert ist.

**14.** Prüfverfahren nach Anspruch 13, wobei beim Berechnen des Signal/Rausch-Verhältnisses alle der Amplituden der Oberschwingungen, deren Ordnung ein ganzzahliges Vielfaches der ganzen Anzahl der vollständigen Umdrehungen des rotierenden Elements (3) ist, die in das Grobsignal (S) eingeschlossen sind, als brauchbares Signal angesehen werden, und alle der Amplituden der Oberschwingungen, deren Ordnung kein ganzzahliges Vielfaches der ganzen Anzahl von vollständigen Umdrehungen des rotierenden Elements (3) ist, die in das Grobsignal (S) eingeschlossen sind, als Rauschen angesehen werden.

**15.** Prüfverfahren nach Anspruch 13 oder 14 und einschließend den weiteren Schritt des Berechnens des Signal/Rausch-Verhältnisses als Bruch, wobei der Zähler eine Summe der Amplituden der Oberschwingungen ist, deren Ordnung ein ganzzahliges Vielfaches der ganzen Anzahl der vollständigen Umdrehungen des rotierenden Elements (3) ist, die in das Grobsignal (S) eingeschlossen sind, und der Nenner eine Summe aller Amplituden der Oberschwingungen ist, deren Ordnung kein ganzzahliges Vielfaches der ganzen Anzahl von vollständigen Umdrehungen des rotierenden Elements (3) ist, die in das Grobsignal (S) eingeschlossen sind.

**16.** Prüfverfahren nach Anspruch 13 oder 14 und einschließend den weiteren Schritt des Berechnen des Signal/Rausch-Verhältnisses als Bruch, wobei der Zähler eine Summe der Amplituden der Oberschwingungen ist, deren Ordnung ein ganzzahliges Vielfaches der ganzen Anzahl der vollständigen Umdrehungen des rotierenden Elements (3) ist, die in das Grobsignal (S) eingeschlossen sind, und der Nenner die Differenz zwischen der Summe von allen der Amplituden und dem Zähler ist.

**17.** Prüfverfahren nach einem der Ansprüche 1 bis 16 und einschließend den weiteren Schritt des Variierens der Abtastfrequenz der reflektierten elektromagnetischen Strahlung (11) als Funktion der Rotationsfrequenz (RF) des rotierenden Elements (3) in einer solchen Weise, dass die Abtastfrequenz zunimmt, wenn die Rotationsfrequenz (RF) zunimmt.

**18.** Prüfverfahren nach einem der Ansprüche 1 bis 17 und einschließend den weiteren Schritt des Variierens der Anzahl der vollständigen Umdrehungen des rotierenden Elements (3), die in das Grobsignal (S) eingeschlossen sind, als Funktion der Rotationsfrequenz (RF) des rotierenden Elements (3) in einer solchen Weise, dass die Anzahl der vollständigen Umdrehungen des rotierenden Elements (3), die in das Grobsignal (S) eingeschlossen sind, zunimmt, wenn die Rotationsfrequenz (RF) zunimmt.

**19.** Prüfvorrichtung zum Prüfen des Vorhandenseins eines rotierenden Elements (3) bei einer bekannten oder bestimmbaren Rotationsfrequenz (RF); wobei die Prüfvorrichtung (6) umfasst:

- einen Emitter (8), um eine elektromagnetische Hauptstrahlung (9) auf das rotierende Element (3) zu richten;
- einen Empfänger (10) zum Empfangen einer reflektierten elektromagnetischen Strahlung (11), die von dem rotierenden Element (3) reflektiert worden ist; und
- eine Verarbeitungseinheit (12), die konfiguriert ist, um die reflektierte elektromagnetische Strahlung (11) abzutasten, um ein zu analysierendes Grobsignal (S) zu bestimmen, um das Grobsignals (S) zu analysieren, um zu verifizieren, ob das Grobsignal (S) eine Periodizität mit einer Frequenz einschließt, die der Rotationsfrequenz (RF) des rotierenden Elements (3) entspricht, und zu bestimmen, dass das rotierende Element (3) tatsächlich vorhanden ist, falls das Grobsignal (S) eine Periodizität mit einer Frequenz einschließt, die der Rotationsfrequenz (RF) des rotierenden Elements (3) entspricht;

die Prüfvorrichtung (6) **dadurch gekennzeichnet ist, dass** die Verarbeitungseinheit (12) konfiguriert ist zum:

- Analysieren des Grobsignals (S) in der Frequenzdomäne;
- Bestimmen der Länge des Grobsignals (S) als Funktion der Rotationsfrequenz (RF) des rotierenden Elements (3) in einer solchen Weise, dass das Grobsignal (S) mindestens zwei vollständige Umdrehungen des rotierenden Elements (3) einschließt; und
- Bestimmen, dass das Grobsignal (S) eine Periodizität mit einer Frequenz entsprechend der Rotationsfrequenz (RF) des rotierenden Elements (3) einschließt, falls der Frequenzgehalt des Grobsignals (S) dominante Komponenten an ganzzahligen Vielfachen der Rotationsfrequenz (RF) des rotierenden Elements (3) aufweist.

**20.** Prüfvorrichtung nach Anspruch 19, wobei die elektromagnetische Hauptstrahlung ein gepulster Laserstrahl ist.

**Revendications**

**1.** Procédé de contrôle pour contrôler la présence d'un élément rotatif (3), le procédé de contrôle inclut les étapes de :

- l'obtention d'une fréquence de rotation (RF) de l'élément rotatif (3) ;
- l'orientation d'un rayonnement électromagnétique principal (9) vers l'élément rotatif (3) au moyen d'un émetteur (8) ;
- la réception d'un rayonnement électromagnétique réfléchi (11) qui a été réfléchi par l'élément rotatif (3) au moyen d'un récepteur (10) ;
- la collecte du rayonnement électromagnétique réfléchi (11) pour déterminer un signal grossier (S) destiné à être analysé ;
- l'analyse du signal grossier (S) pour vérifier si le signal grossier (S) inclut ou non une périodicité avec une fréquence correspondant à la fréquence de rotation (RF) de l'élément rotatif (3) ; et
- la détermination que l'élément rotatif (3) est vraiment présent si le signal grossier (S) inclut une périodicité avec une fréquence correspondant à la fréquence de rotation (RF) de l'élément rotatif (3) ;

le procédé de contrôle est **caractérisé en ce qu'**il inclut les étapes supplémentaires de :

- l'analyse du signal grossier (S) dans le domaine de fréquence ;
- la détermination de la longueur du signal grossier (S) en fonction de la fréquence de rotation (RF) de l'élément rotatif (3) de manière telle que le signal grossier (S) inclue au moins deux rotations complètes de l'élément rotatif (3) ; et
- la détermination que le signal grossier (S) inclut une périodicité avec une fréquence correspondant à la fréquence de rotation (RF) de l'élément rotatif (3), si le contenu de fréquence du signal grossier (S) possède des composantes prédominantes à des multiples intégraux de la fréquence de rotation (RF) de l'élément rotatif (3).

**2.** Procédé de contrôle selon la revendication 1, et incluant les étapes supplémentaires de :

- la détermination d'une période de rotation exacte du signal grossier (S) au moyen d'une analyse, dans le domaine de temps, du signal grossier (S) ;
- la coupe d'une partie du signal grossier (S) en fonction de la période de rotation exacte du signal grossier (S) de manière telle que le signal grossier coupé (S) inclue exactement un nombre entier de rotations complètes de l'élément rotatif (3) ; et
- l'analyse du signal grossier coupé (S) dans le domaine de fréquence.

**3.** Procédé de contrôle selon la revendication 2, et incluant l'étape supplémentaire de la détermination de la période de rotation exacte du signal grossier (S) au moyen d'une analyse dans le domaine de temps qui est réalisée avec un algorithme de détection du pitch.

**4.** Procédé de contrôle selon la revendication 3, et incluant l'étape supplémentaire de la détermination de la période de rotation exacte du signal grossier (S) au moyen d'une analyse dans le domaine de temps qui est réalisée avec un algorithme de détection du pitch en utilisant la fonction d'auto-corrélation AMDF (« Average Magnitude Difference Function »).

**5.** Procédé de contrôle selon la revendication 2, 3 ou 4, et incluant l'étape supplémentaire de la détermination de la période de rotation exacte du signal grossier (S) en recherchant la période de rotation exacte au sein d'un intervalle de recherche qui est déterminé en fonction d'une fréquence de rotation nominale de l'élément rotatif (3) et en fonction d'une plage de variabilité par rapport à la fréquence de rotation nominale.

**6.** Procédé de contrôle selon la revendication 5, et incluant l'étape supplémentaire de la détermination que l'élément rotatif (3) ne peut pas être reconnu, et ainsi n'est pas présent, s'il n'est pas possible de déterminer la période de rotation exacte du signal grossier (S) au sein de l'intervalle de recherche.

**7.** Procédé de contrôle selon l'une quelconque des revendications 2 à 6, et incluant l'étape supplémentaire de décimation/expansion, en appliquant un rééchantillonnage, du signal grossier coupé (S), avant que l'analyse dans le domaine de temps soit réalisée.

**8.** Procédé de contrôle selon la revendication 7, et incluant l'étape supplémentaire de décimation/expansion du signal grossier (S) de manière telle que le signal grossier (S) inclue un nombre de échantillons qui est égal à une puissance du nombre deux.

**9.** Procédé de contrôle selon l'une quelconque des revendications 1 à 8, et incluant l'étape supplémentaire de l'application d'une transformée de Fourier au signal grossier (S) pour aller du domaine de temps au domaine de fréquence.

**10.** Procédé de contrôle selon la revendication 9, dans lequel ladite transformée de Fourier est une FFT (transformée de Fourier rapide).

**11.** Procédé de contrôle selon la revendication 9 ou la revendication 10, et incluant les étapes supplémentaires de :

- la détermination de l'amplitude et de l'ordre de l'harmonique avec l'amplitude la plus élevée ; et
- la détermination que l'élément rotatif (3) est vraiment présent si l'ordre de l'harmonique avec l'amplitude la plus élevée est un multiple intégral du nombre entier de rotations complètes de l'élément rotatif (3) incluses dans le signal grossier (S).

**12.** Procédé de contrôle selon la revendication 11, et incluant l'étape supplémentaire de la détermination que l'élément rotatif (3) est vraiment présent si l'ordre de l'harmonique avec l'amplitude la plus élevée est un multiple intégral du nombre entier de rotations complètes de l'élément rotatif (3) incluses dans le signal grossier (S), et si, en même temps, l'amplitude la plus élevée de l'harmonique avec l'amplitude la plus élevée est supérieure à une première valeur de seuil.

**13.** Procédé de contrôle selon la revendication 9 ou la revendication 10, et incluant les étapes supplémentaires de

- le calcul d'un rapport signal-bruit en fonction du nombre entier de rotations complètes de l'élément rotatif (3) incluses dans le signal grossier (S) ; et
- la détermination que l'élément rotatif (3) est vraiment présent si le rapport signal-bruit est supérieur à une seconde valeur de seuil.

**14.** Procédé de contrôle selon la revendication 13, dans lequel, dans le calcul du rapport signal-bruit, toutes les amplitudes des harmoniques dont l'ordre est un multiple intégral du nombre entier de rotations complètes de l'élément rotatif (3) incluses dans le signal grossier (S) sont considérées en tant que signal utile, et toutes les amplitudes des harmoniques dont l'ordre n'est pas un multiple intégral du nombre entier de rotations complètes de l'élément rotatif (3) incluses dans le signal grossier (S) sont considérées en tant que bruit.

**15.** Procédé de contrôle selon la revendication 13 ou 14, et incluant l'étape supplémentaire du calcul du rapport signal-bruit en tant que fraction où le numérateur est une somme des amplitudes des harmoniques dont l'ordre est un multiple intégral du nombre entier de rotations complètes de l'élément rotatif (3) incluses dans le signal grossier (S), et le dénominateur est une somme de toutes les amplitudes des harmoniques dont l'ordre n'est pas un multiple intégral du nombre entier de rotations complètes de l'élément rotatif (3) incluses dans le signal grossier (S).

**16.** Procédé de contrôle selon la revendication 13 ou 14, et incluant l'étape supplémentaire du calcul du rapport signal-bruit en tant que fraction où le numérateur est une somme des amplitudes des harmoniques dont l'ordre est un multiple intégral du nombre entier de rotations complètes de l'élément rotatif (3) incluses dans le signal grossier (S), et le dénominateur est la différence entre la somme de toutes les amplitudes et le numérateur.

**17.** Procédé de contrôle selon l'une quelconque des revendications 1 à 16, et incluant l'étape supplémentaire de la variation de la fréquence d'échantillonnage du rayonnement électromagnétique réfléchi (11) en fonction de la fréquence de rotation (RF) de l'élément rotatif (3) de manière telle que la fréquence d'échantillonnage augmente lorsque la fréquence de rotation (RF) augmente.

**18.** Procédé de contrôle selon l'une quelconque des revendications 1 à 17, et incluant l'étape supplémentaire de la variation du nombre de rotations complètes de l'élément rotatif (3) incluses dans le signal grossier (S) en fonction de la fréquence de rotation (RF) de l'élément rotatif (3) de manière telle que le nombre de rotations complètes de l'élément rotatif (3) incluses dans le signal grossier (S) augmente lorsque la fréquence de rotation (RF) augmente.

**19.** Appareil de contrôle pour contrôler la présence d'un élément rotatif (3) à une fréquence de rotation (RF) connue ou déterminable ; l'appareil de contrôle (6) comprend :

- un émetteur (8) pour orienter un rayonnement électromagnétique principal (9) vers l'élément rotatif (3) ;
- un récepteur (10) pour recevoir un rayonnement électromagnétique réfléchi (11) qui a été réfléchi par l'élément rotatif (3) ; et
- une unité de traitement (12) qui est configurée pour échantillonner le rayonnement électromagnétique réfléchi (11) pour déterminer un signal grossier (S) destiné à être analysé, analyser le signal grossier (S) pour vérifier si le signal grossier (S) inclut une périodicité avec une fréquence correspondant à la fréquence de rotation (RF) de l'élément rotatif (3), et déterminer que l'élément rotatif (3) est vraiment présent si le signal grossier (S) inclut une périodicité avec une fréquence correspondant à la fréquence de rotation (RF) de l'élément rotatif (3) ;

l'appareil de contrôle (6) est **caractérisé en ce que** l'unité de traitement (12) est configurée pour

- analyser le signal grossier (S) dans le domaine de fréquence ;
- déterminer la longueur du signal grossier (S) en fonction de la fréquence de rotation (RF) de l'élément rotatif (3) de manière telle que le signal grossier (S) inclue au moins deux rotations complètes de l'élément rotatif (3) ; et
- déterminer que le signal grossier (S) inclut une périodicité avec une fréquence correspondant à la fréquence de rotation (RF) de l'élément rotatif (3) si le contenu de fréquence du signal grossier (S) possède des composantes dominantes à des multiples intégraux de la fréquence de rotation (RF) de l'élément rotatif (3).

**20.** Appareil de contrôle selon la revendication 19, dans lequel ledit rayonnement électromagnétique principal est un faisceau laser pulsé.

Fig. 1

Fig. 2

S

EP 2 731 754 B1

Fig. 3

AMDF

EP 2 731 754 B1

Fig. 4

Fig. 5

EP 2 731 754 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5293048 A

- EP 0493908 A1